# EUROPEAN PATENT SPECIFICATION

(11) **EP 2 466 725 B1**
(45) Date of publication and mention of the grant of the patent: **03.09.2014**
(21) Application number: 10195055.8
(22) Date of filing: 15.12.2010
(51) Int. Cl.: H02K 21/14, H02K 1/16, H02K 1/27

(54) **Synchronous motor with permanent magnets**
Synchronmotor mit Permanentmagneten
Moteur synchrone doté d'aimants permanents

(43) Date of publication of application: 20.06.2012
(73) Proprietor: Infranor Holding SA, 1400 Yverdon-les-Bains (CH)
(72) Inventor: Tassinario, Giampiero, 50129 Firenze (IT); Flotats, Ivan, 08025 Barcelona (ES); Cruellas, Francesc, 08391 Tiana (ES)
(74) Representative: Bugnion Genève

(56) References cited:
- EP-A1- 1 710 891
- EP-A2- 2 254 221
- JP-A- 2010 161 896
- US-A- 2 461 296
- US-A- 4 868 970
- US-A1- 2002 130 580

## Description

The present invention relates to a sensorless synchronous motor comprising a cylindrical rotor provided with permanent magnets located inside a cylindrical slotless stator provided with a winding.

The positioning of the rotor of such a synchronous motor in relation to the stator is usually controlled by an outside sensor device checking the inductance variation of the motor electrical phases.

JP 2010 161896 A discloses a synchronous motor comprising a cylindrical rotor provided with permanent magnets located inside a slotted cylindrical stator provided with a winding. The lateral surface of the rotor is provided all along its active surface with radial undulated protuberances facing the winding.

EP 1 710 891 A2 discloses a synchronous motor comprising a cylindrical rotor provided with permanent magnets located inside a cylindrical stator provided with a winding. The magnets are placed over the lateral surface of the rotor. The two axial ends of the lateral surface of the rotor are provided with protuberances facing the ends of the winding.

The present invention proposes a synchronous motor in which the geometry of the rotor allows to create a magnetic sensor useful as a position feedback of the rotor and allowing to eliminate the outside sensor device and to decrease the overall length of the motor.

The synchronous motor according to the present invention is characterized by the characterizing portion of claim 1.

So the invention allows making specific rotor shape that gives positioning of the rotor without a usual sensor control unit.

It is clear that having a stator without any slot, the reluctance of the motor will be depending on the shape the rotor may have.

If the stator is provided with slots, it is important that the dimensions of the slots entrances are minimized to decrease the reluctance variation.

If magnets are placed over the lateral surface of cylindrical rotor, as the relative permeability of rare earth magnets is close to air, no reluctance variation will exist. This has an influence not only in the cogging torque (explained deeply in EP 99810212.3) but also in the values of the inductance of the winding of each phase that will remain constant. Some sensorless controls are based on the value change of the inductance of the motor as a signal to the electronic drive to inject the current in the phases of the motor. This is quite common in slotted motors but with the slotless design becomes not so obvious.

The invention will be described in detail in relation to the attached drawings
Fig 1 is a perspective view of a rotor with axial extending protuberances according to the present invention;
Figure 2 is the rotor of figure 1 with three coils each corresponding to a different electrical phase according to the present invention;
Figure 3 is a side view of a motor provided with a rotor presenting radial extending protuberances;
Figure 4 is a side view of another rotor presenting radial extending protuberances;
Figure 5 is a side view of a stator with slots.

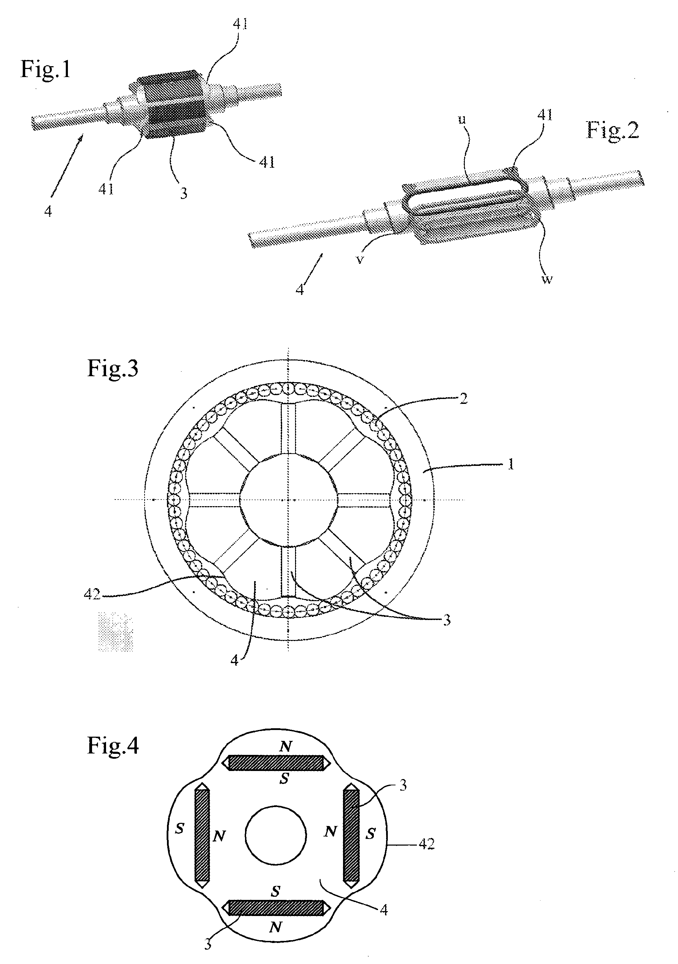

In figure 1 permanent magnets 3 are placed over the lateral surface of a cylindrical rotor 4. The rotor is provided at both ends of its lateral surface with axial extended protuberances 41. The protuberances 41 are located in the area in front of the place where the turns of the coils are fitted (figure 2). So the coils will be sensitive to the presence or not of the steel or the iron of the rotor 4 close to them and so, sensitive to the change of the inductance value when rotating the rotor. It is necessary to have the same number of protuberances 41 like the rotor pole pairs, and of course must be placed symmetrical in respect the center of the rotor. Otherwise the influence of the protuberances will be compensated from one side versus the other. These protuberances must have an alternative shape, triangular, sinusoidal.... The protuberances are designed so as in a position of the rotor one phase, for example U (figure 2), will have the maximum value of inductance, another one, for example phase W, will have the minimum value of inductance and the third, for example phase V, will have an intermediate value of inductance.

Depending on the sensibility of the electronics the dimensions of the protuberances of the rotor may vary. It is also possible the protuberances are made out of different material from that of the rotor which is glued or fixed by screws. The said material may present a higher permeability like for example µ-metal.

The protuberances allow reducing the length of the motor as the control of the motor does not need the usual external sensor.

If the magnets are placed radially inside the rotor instead of the surface, the undulation of the protuberances must be made in the active part of the lateral surface of the rotor as shown in figure 3 and close to JP 2010 161896 A.

In figure 3 they are schematically represented: a stator 1, a winding 2, permanent magnets 3 radially located inside the rotor 4. The lateral surface of the rotor 4 is provided with undulated protuberances 42 axially extended in the active part of the said surface. Active part of the lateral surface means the surface facing the winding 2. Depending of the position of the rotor the value of the inductance will vary for each electrical phase as previously explained.

In figure 4 another disposition of the permanent magnets 3 inside a rotor 4 is shown that is very close to the motor of JP2010 161896 A. The undulated protuberances 42 are also axially extended in the active part of lateral surface of the rotor 4.

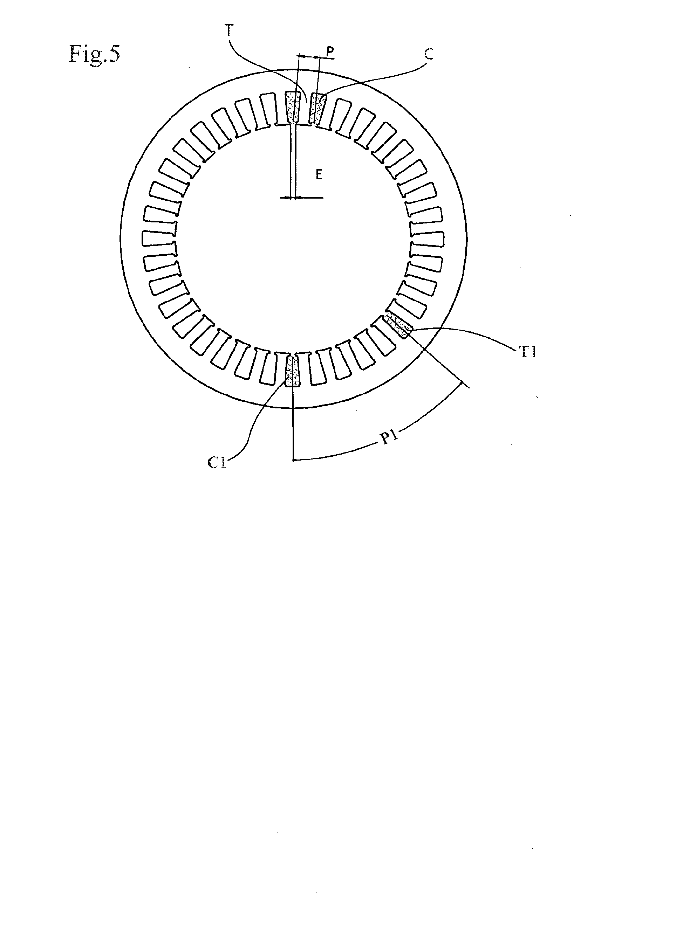

If the stator is provided with slots as shown in figure 5 it is important to minimize the width E of the entrance of the slots allowing to minimize the air gap influence in the motor reluctance.

It is important to limit the influence of air gap or air gaps due to the entrances of the slots so as the reluctance value does not fluctuate more than 5%. Standard measurement of inductance may distinguish 5% fluctuation correctly. That means that a fluctuation of the inductance equal or less 5% will not interpreted as the presence or absence of rotor protuberance.

In figure 5 is shown a first coil C wound inside the slots of two consecutive slots or around a tooth T. The pitch of this coil is P and the width of the entrance is E. Another example is shown in the same figure 5 but not for a same motor. We have a coil C1 wound inside two slots which are not consecutives. The pitch of the coil C1 is P1 and the width of each slot is E as previously. They are four slots inside the coil C1.

In order to minimize the air gap or absence of magnetic material at the entrances of the slots according to the following relation:
(n+1)E ≤ 0.05 P, P being the pitch between two slots in which a coil is wound, E the width of the entrances of the slots and n the number of slots located inside the coil.

In the first example relating to the coil C, n = 0 so E ≤ 0.05P. In the second example relating to the coil C1, n=4 so the relation is 4E ≤ 0.05 P1.

To sum up the variation of the rotor material facing the winding allows varying the value of the inductance more than 5 % for each electrical phase and making possible to detect the rotor position without using a special sensor device.

## Claims

1. A sensorless synchronous motor comprising a cylindrical rotor (4) provided with permanent magnets (3) located inside a cylindrical stator provided with a winding (U, V, W), wherein the permanent magnets (3) are placed over the lateral surface of the rotor (4) and wherein the two axial ends of the lateral surface of the rotor are provided with axial extending protuberances (41) facing the said winding (U, V, W), **characterized in that** the stator is a slotless stator, **in that** the rotor (4) has the same number of protuberances (41) like the rotor pole pairs and **in that** said protuberances are placed symmetrical to the center of the rotor.

2. A synchronous motor according to claim 1, **characterized in that** said protuberances (41) are made out of different material from that of the rotor which is glued or fixed by screws, wherein said material presents the same or a higher permeability, like for example µ-metal.

## Patentansprüche

1. Sensorloser Synchronmotor, umfassend einen zylindrischen Rotor (4), der mit Dauermagneten (3) ausgestattet ist, die sich innerhalb eines zylindrischen Stators befinden, der mit einer Wicklung (U, V, W) ausgestattet ist, wobei die Dauermagnete (3) über der seitlichen Fläche des Rotors (4) angeordnet sind, und wobei die zwei axialen Enden der seitlichen Fläche des Rotors mit sich axial ersteckenden Vorsprüngen (41) ausgestattet sind, die der Wicklung (U, V, W) gegenüber liegen, **dadurch gekennzeichnet, dass** der Stator ein nutenloser Stator ist, dass der Rotor (4) die gleiche Anzahl von Vorsprüngen (41) wie die Rotorpol-Paare aufweist, und dadurch, dass die Vorsprünge symmetrisch zum Zentrum des Rotors angeordnet sind.

2. Synchronmotor nach Anspruch 1, **dadurch gekennzeichnet, dass** die Vorsprünge (41) aus verschiedenem Material wie demjenigen des Rotors hergestellt sind, das geklebt oder durch Schrauben befestigt ist, wobei das Material die gleiche oder eine höhere Permeabilität wie z.B. µ-Metall aufweist.

## Revendications

1. Moteur synchrone sans capteur comprenant un rotor cylindrique (4) prévu avec des aimants permanents (3) positionnés à l'intérieur d'un stator cylindrique doté d'un enroulement (U, V, W), dans lequel les aimants permanents (3) sont placés sur la surface latérale du rotor (4) et dans lequel les deux extrémités axiales de la surface latérale du rotor sont prévues avec des protubérances (41) s'étendant de manière axiale faisant face audit enroulement (U, V, W), **caractérisé en ce que** le stator est un stator sans fente, **en ce que** le rotor (4) a le même nombre de protubérances (41) que les paires de pôles de rotor et **en ce que** lesdites protubérances sont placées de manière symétrique au centre du rotor.

2. Moteur synchrone selon la revendication 1, **caractérisé en ce que** lesdites protubérances (41) sont réalisées avec un matériau différent de celui du rotor qui est collé ou fixé avec des vis, dans lequel ledit matériau présente la même perméabilité ou une perméabilité supérieure, comme par exemple le µ-métal.
